# FASCICULE DE BREVET EUROPEEN

(11) **EP 1 479 565 B1**
(45) Date de publication et mention de la délivrance du brevet: **26.07.2006**
(21) Numéro de dépôt: 04300287.2
(22) Date de dépôt: 18.05.2004
(51) Int. Cl.: B60R 7/04, B60R 11/00, B60R 16/02, H02G 11/00

(54) **Console pour habitacle de véhicule**
Konsole für einen Fahrzeuginnenraum
Console for a vehicle interior

(30) Priorité: 23.05.2003 FR 0306262
(43) Date de publication de la demande: 24.11.2004
(73) Titulaire: Renault s.a.s., 92100 Boulogne Billancourt (FR)
(72) Inventeur: Feyel, Marie-Claire, 78000 Versailles (FR); Panhelleux, Jérôme, 75015 Paris (FR)

(56) Documents cités:
- FR-A- 2 822 770
- US-A- 3 646 282
- PATENT ABSTRACTS OF JAPAN vol. 012, no. 041 (M-666), 6 février 1988 (1988-02-06) -& JP 62 194955 A (AISIN SEIKI CO LTD), 27 août 1987 (1987-08-27)

## Description

La présente invention se rapporte à une console pour habitacle de véhicule, en particulier à une console coulissante.

Il est connu de proposer un véhicule avec une console qui est mobile dans l'habitacle selon des moyens de guidage entre une position avant et une position arrière.

Une telle console coulissante est décrite dans le brevet JP 62 194955. Cette console comporte deux éléments d'habillage mobiles l'un par rapport à l'autre. Une extrémité d'un câble de la console est raccordée à un des éléments, l'autre extrémité du câble étant raccordée à l'autre des éléments, le câble étant plus ou moins plié en fonction du positionnement relatif des éléments. L'inconvénient du montage proposé est que le pliage du câble peut ne pas être optimum, au risque de dégrader le câble, en particulier si le câble se coince entre les deux éléments.

Le brevet FR2822770 décrit une console pour habitacle de véhicule, du type comportant un premier élément monté coulissant par rapport à un second élément entre une position extrême avant et une position extrême arrière, et comportant un câble dont une première extrémité est raccordée au premier élément et dont une deuxième extrémité est raccordée au second élément.

Le but de l'invention est d'améliorer une console coulissante pour habitacle de véhicule, en particulier le pliage du câble interne de la console.

Dans ce but, dans la console selon l'invention, le câble comporte un troncon rigide comportant une âme rigide, le troncon rigide du câble étant apte à se déplacer avec le premier élément par rapport au second élément.

Le second élément peut comporter au moins un moyen de guidage dans lequel se déplace le tronçon rigide du câble.

Le moyen de guidage du câble peut être un tunnel formé dans le deuxième élément et orienté parallèlement à la direction de coulissement.

Le moyen de guidage du tronçon rigide du câble peut être aménagé dans un socle du second élément sur lequel un chariot du premier élément est monté coulissant.

Le câble peut comporter une boucle souple de débattement qui est interposée entre le socle et le tronçon rigide.

Le moyen de guidage du tronçon rigide du câble peut comporter des moyens de guidage de la boucle dans un plan horizontal.

L'extrémité avant du tronçon rigide du câble raccordée à la boucle peut être logée en permanence à l'intérieur du moyen de guidage.

Un segment d'extrémité arrière du tronçon rigide du câble raccordé au chariot peut être logé en permanence à l'intérieur du moyen de guidage.

Une extrémité avant du socle peut comporter un guide transversal convexe adapté à recevoir au moins une partie de la boucle souple dans la position arrière du premier élément.

Le câble peut desservir en énergie électrique un organe de commande de moyens électriques de verrouillage pour immobilisation du premier élément, ledit organe étant monté sur le premier élément.

Le tronçon rigide du câble peut être rectiligne.

La présente invention va maintenant être décrite par un exemple de réalisation non limitatif, en liaison avec les dessins annexés sur lesquels :
- la figure 1 est vue schématique à plat d'une console selon l'invention implantée dans un habitacle de véhicule,
- la figure 2 est vue schématique en perspective d'une console selon l'invention implantée dans un habitacle de véhicule,
- la figure 3 est vue schématique en perspective éclatée d'une console selon l'invention,

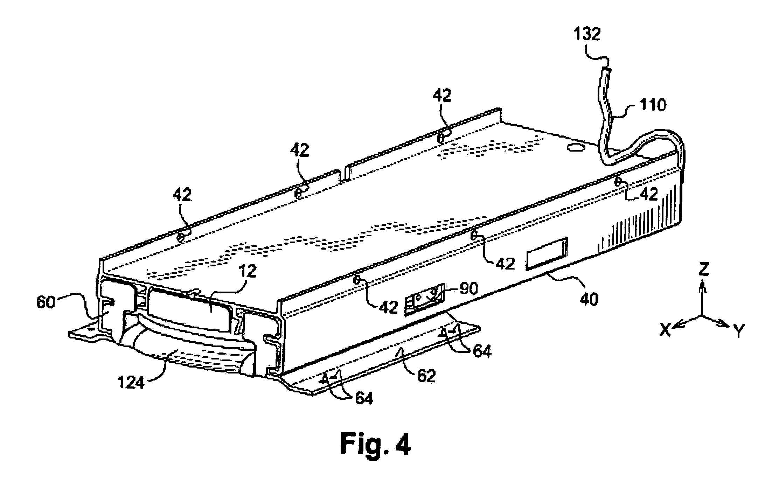

- la figure 4 et la figure 5 sont des vues en perspective montrant partiellement les moyens de guidage d'un câble de la console selon l'invention,
- la figure 6 est une section de la console selon l'invention montrant les moyens de circulation du câble,
- la figure 7 est vue schématique en coupe du socle avec le câble de la console selon l'invention, un chariot de la console étant en position extrême arrière,
- la figure 8 est vue schématique de la console comme à la figure 7, mais dans laquelle le chariot de la console est en position extrême avant.

Selon l'invention, comme représenté sur les figures, un véhicule 1 présente un habitacle 2 avec une console coulissante 10 à l'arrière d'une planche de bord 7. L'habitacle comporte par exemple deux sièges avant 3 sur une première rangée et deux sièges arrière 5 sur une deuxième rangée. La deuxième rangée peut comporter une banquette.

Dans la description qui va suivre, les termes longitudinal, transversal et vertical sont adoptés à titre non limitatif selon le trièdre X, Y, Z du repère indiqué sur les figures. L'axe X du repère est selon la direction longitudinale du véhicule, ici de l'arrière vers l'avant.

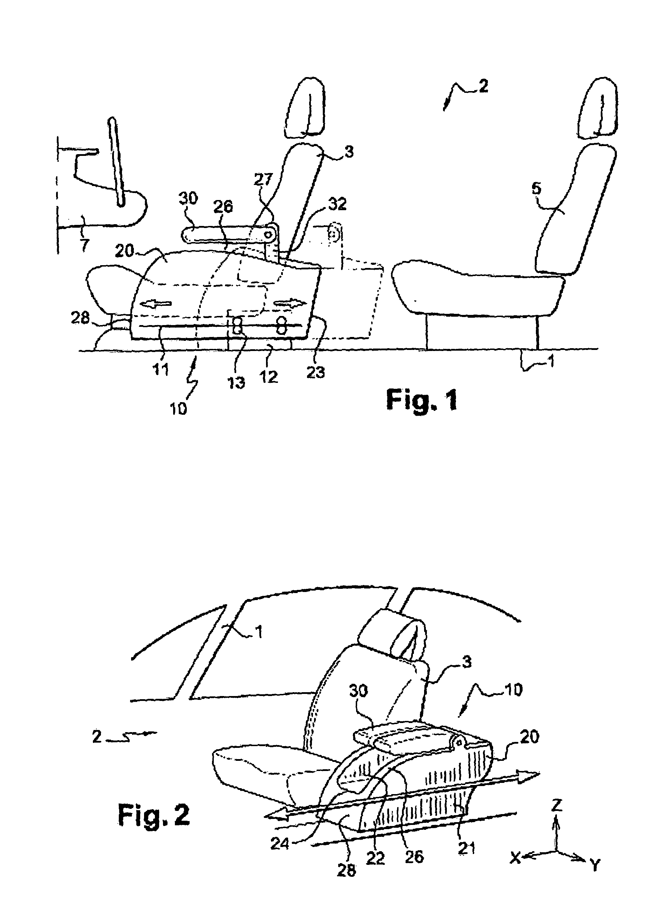

La console 10 est coulissante entre une position dite avant comme représenté en trait plein à la figure 1 et une position dite arrière, à proximité des sièges arrières, comme représenté en traits mixtes à la figure 1. Des moyens de guidage à coulissement de la console comportent des moyens mobiles par rapport au véhicule et des moyens fixes par rapport au véhicule. Les moyens de guidage déterminent une trajectoire déterminée de la console 10 dans l'habitacle 2, ici une trajectoire rectiligne d'avant en arrière.

Les moyens de guidage de la console 10 comportent des rails 11 mobiles, internes à la console, solidaires d'un corps 20 de la console et montés coulissants par l'intermédiaire de roulettes 13 sur un socle 12 fixe par rapport au plancher du véhicule. Les roulettes 13 sont solidaires du socle 12. Les moyens de guidage en translation ou coulissement longitudinal de la console 10 seront décrits de façon détaillé ultérieurement. En variante non représentée, les rails sont fixes et portent le socle, les roulettes étant intégrée au corps de la console qui roule sur les rails fixes.

Dans l'exemple représenté, la console 10 comporte deux faces latérales longitudinales 21 sensiblement verticales, une face transversale avant 28 sensiblement verticale dans sa partie inférieure à proximité du plancher du véhicule, une face transversale arrière 23 inclinée de bas en haut vers l'arrière et une face supérieure 26 raccordée au haut des faces latérales et transversales.

Un compartiment avant 22A de rangement et un compartiment arrière 228 de rangement sont aménagés dans le corps 20. Un bac intérieur non représenté sur les figures est monté dans le corps pour délimiter chaque compartiment 22A et 22B, entre les faces latérales 21, les faces transversales 23, 28 et une cloison interne verticale 25 située aux deux tiers de la longueur de la console 10, vers l'arrière. La face supérieure 26 du corps est découpée pour ménager par le haut un orifice 24A d'accès au compartiment 22A et un orifice 24B d'accès au compartiment 22B.

La console 10 comporte une poignée 27 sous forme d'arche posée sur la face supérieure 26. La poignée 27 est posée en saillie par rapport à la face supérieure, c'est à dire au dessus du niveau de la face supérieure 26 à proximité de la poignée, au niveau de la cloison interne 25.

L'arche formant la poignée 27 est aménagée dans une partie de l'habillage servant de support de fixation de bras 30 d'un accoudoir. Sous l'arche, le support présente un évidement 32 formant une portion de préhension de la poignée 27. La poignée est prévue pour être saisie par un usager pour manipuler la console selon les moyens de guidage en passant la main à travers la portion de préhension 32.

La console 10 selon l'invention comporte aussi un mécanisme commandé de verrouillage électrique des rails 11 par rapport au socle 12, avec un organe de commande de déverrouillage tel qu'un interrupteur à actionner par un utilisateur pour autoriser le coulissement de la console 10. L'interrupteur est logé dans un logement 34 d'un module électrique 36 monté dans la cloison 25. L'interrupteur est accessible à l'utilisateur par la portion de préhension de la poignée, le logement 34 débouchant sur la face inférieure ou interne de la poignée 27, en correspondance avec la portion de préhension 32. Le module électrique 36 comporte aussi des moyens d'éclairage des compartiments 22A et 22B.

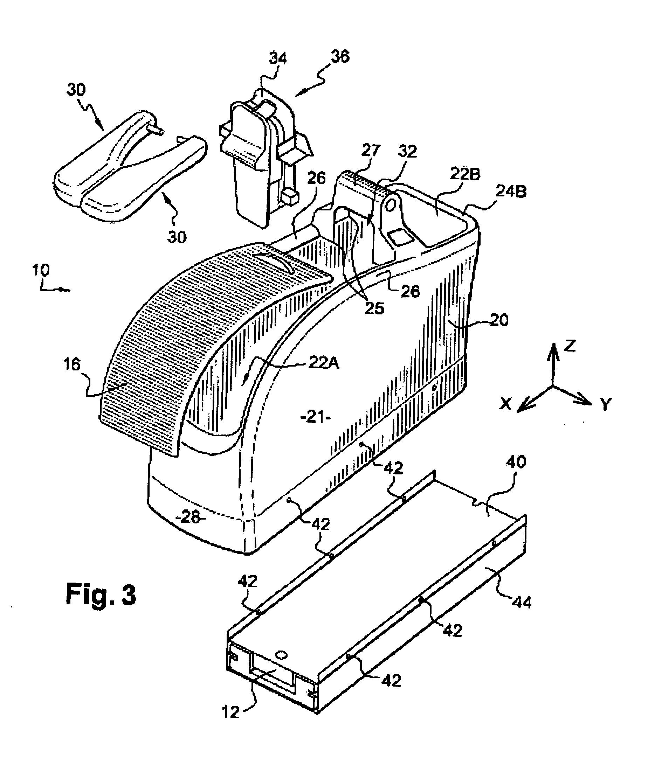

Le corps 20 de la console 10 est fixé sur un chariot 40 (figure 3) dans lequel sont aménagés les rails 11. Le corps est fixé sur le chariot par l'intermédiaire de moyens de fixations classiques tels que des vis montées dans des trous 42.

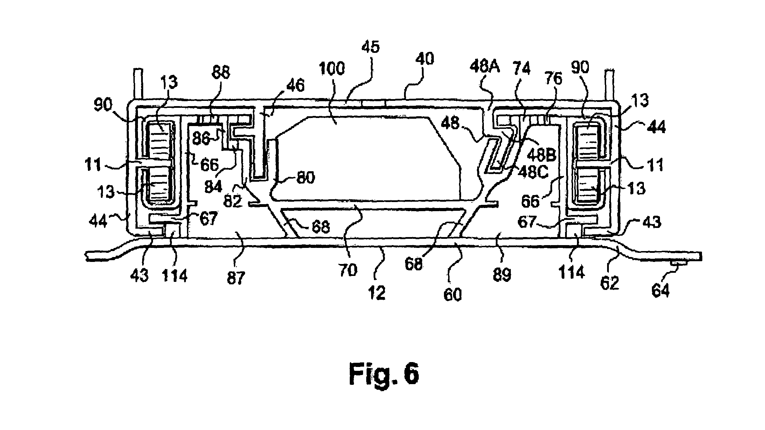

Le chariot 40 est un profilé qui comporte deux joues latérales verticales 44, reliées entre elles par un dos supérieur horizontal 45. Le dos horizontal 45 est raccordée aux parois verticales à 80% de la hauteur de ces dernières, sur le haut de ces dernières. Les trous 42 de fixation sont situés sur les joues latérales 44 au dessus du niveau du dos horizontal 45. Chaque joue latérale 44 (figure 6) comporte une extension inférieure horizontale 43 vers l'intérieur du profilé. Le profilé 40 comporte une aile verticale de verrouillage 46 situé à un tiers de la largeur du profilé et parallèle aux joues latérales 44. A un tiers de la hauteur de l'aile 46, vers le haut, une aile de retenue horizontale 47 est raccordée à l'aile 46, vers l'extérieur. Le profilé 40 comporte une aile verticale de retenue 48 de profil en Z avec un premier flanc 48A vertical raccordé au dos horizontal 45, un deuxième flanc 48B horizontal raccordé au flanc 48A et, raccordé au flanc 48B, un troisième flanc 48C incliné vers le bas et vers le milieu du profilé 40. A mi-hauteur de chaque joue latérale 44 du profilé 40 est raccordée une paroi horizontale qui forme une piste de roulement des rails 11.

Le socle 12 comporte une platine 60 réalisée sous forme d'un profilé avec une embase 62 sensiblement horizontale et des parois en saillie de l'embase vers le haut.

L'embase 62 est munie de trous 64 sur des ailes latérales pour le passage de vis de fixation avec le plancher du véhicule 1. La platine 60 comporte deux parois latérales verticales 66. L'embase 62 comporte une paroi horizontale 67 raccordé à chaque paroi 66 vers l'extérieure, à proximité de l'embase 62. Un interstice est présent entre la paroi 67 et l'embase 62.

La platine 60 comporte deux parois internes avec un pied incliné 68, chacun raccordé à son extrémité inférieure à l'embase 62 entre les parois latérales 66, à un tiers de la distance séparant les parois latérales 66, l'inclinaison étant orientées du bas vers le haut et vers les parois latérales 66. Chaque pied 68 a une hauteur égale à la moitié de la hauteur des parois internes. Une plaque intermédiaire 70 est raccordée aux pieds 68 au tiers de la hauteur des parois interne.

L'un des pieds 68 est raccordé à son extrémité supérieure à deux branches de retenue parallèles inclinées dans la direction du pied, une branche intérieure 72 et une branche extérieure 74. La branche extérieure 74 est plus haute que la branche intérieure 72. La branche extérieure 74 est raccordée à son extrémité supérieure à une paroi horizontale 76 raccordée à la paroi latérale 66 la plus proche. Vers l'intérieur, la paroi horizontale 76 s'étend en porte à faux par rapport à la branche extérieure 74, jusqu'à la verticale de l'extrémité extérieure de la branche intérieure 72. Un interstice est situé entre la branche intérieure 72 et la branche extérieure 74, l'interstice étant adapté à la réception des flans 48B et 48C de l'aile de retenue 48.

L'autre des pieds est raccordé à son extrémité supérieure à deux branches verticales, une branche intérieure 80 de verrouillage et une branche extérieure 82. La branche extérieure 82 est raccordée à une branche horizontale 84 vers l'extérieur. La branche horizontale 84 est raccordée à une branche verticale 86. La branche verticale 86 est raccordée à son extrémité supérieure à une paroi horizontale 88 raccordée à la paroi latérale 66 la plus proche. Vers l'intérieur, la paroi horizontale 88 s'étend en porte à faux par rapport à la branche verticale 86, jusqu'à la verticale de la face intérieure de la branche extérieure 82. Un premier interstice est situé entre la branche intérieure 80 et la branche extérieure 82, l'interstice étant adapté à la réception de l'aile de verrouillage 46. Un deuxième interstice est situé entre la branche horizontale 84 et la paroi 88, l'interstice étant adapté à la réception de l'aile de retenue 47.

La platine 60 délimité ainsi intérieurement un premier tunnel 87 entre l'une des parois latérale 66, l'embase 62, l'un des pieds 68, les branches 82, 84, 86 et la paroi 88. Un deuxième tunnel 89 est délimité intérieurement dans la platine 60, entre l'autre des parois latérale 66, l'embase 62, l'autre des pieds 68, la branche 74 et la paroi 76.

Le socle 12 comporte un flasque arrière 120 situé à proximité de l'extrémité arrière du tunnel 89 et un flasque avant 122 situé à proximité de l'extrémité avant du tunnel 89. A l'extrémité avant des pieds 68, sensiblement au niveau de l'extrémité avant des tunnels 87 et 89, le socle 12 comporte un guide transversal 124.

Le guide transversale 124 comporte un piétement inférieur 126 situé entre le niveau de l'embase 62 et le niveau de la plaque intermédiaire 70. Le piétement 126 comporte une gorge 128 supérieure au dessus du piétement, entre les tunnels 87 et 89. Le guide 124 comporte une courbure longitudinalement convexe vers l'avant du socle, l'extrémité avant du piétement 126 dépassant le niveau du flasque avant 122.

Le socle 12 peut comporter symétriquement un guide arrière au niveau de l'extrémité arrière des pieds 68.

Deux cages 90 sont montée sur la face extérieure de chaque paroi 66 de la platine 60. Les cages 90 sont montées sur chaque paroi 66 à une distance déterminée les décalant longitudinalement afin d'assurer la stabilité du corps 20 de la console 10. Chaque cage 90 comporte deux galets également décalés longitudinalement, un galet supérieur 13 et un galet inférieur 94. La paroi horizontale 11 du profilé formant rail est adaptée à être montée entre les galets 13 pour le coulissement du corps 20 de la console 10.

Un module de blocage 100 est monté entre les parois interne 68 de la platine 60. Le module de blocage 100 comporte au moins un pion de blocage en translation du profilé 40 par rapport à la platine 60. Le pion de blocage est prévu pour coopérer avec l'une d'une pluralité de lumière de l'aile de verrouillage 46. Le pion est mobile transversalement à la branche intérieure 80 de la paroi de verrouillage 46, d'une position de verrouillage de la console 10 à une position de déverrouillage en translation de la console.

En position de verrouillage, le pion est engagé dans la lumière en traversant au moins la branche intérieure 80 de la platine 60 et l'aile de verrouillage 46 du profilé 40.

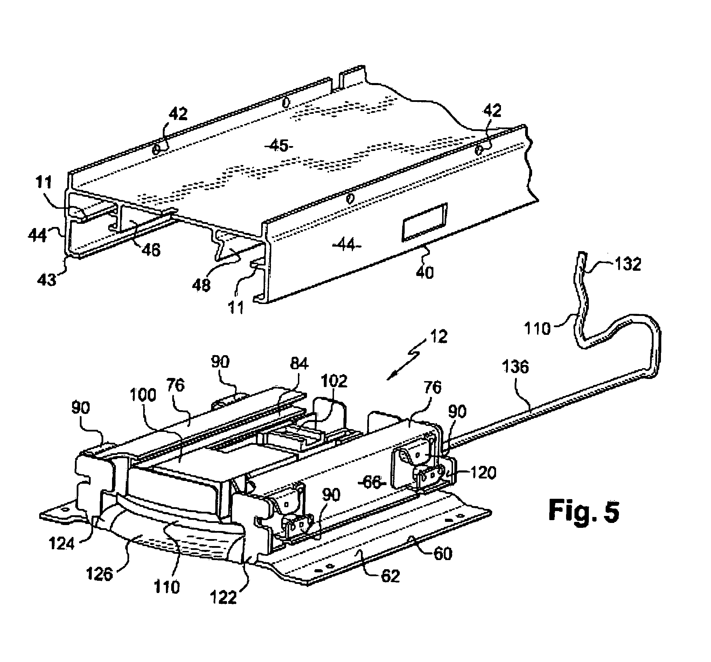

En position de déverrouillage, le pion est rétracté hors de la lumière, en retrait dans la branche intérieure 80. Le pion est actionné à mobilité par un moteur électrique du module de blocage 100 actionnant une palette 102 (figure 5) sur laquelle est monté le pion. En position déverrouillée du pion porté par la palette 102, le profilé 40 portant les rails 11 peut coulisser entre les galets 13 et 94 du socle 12, sous l'action d'un utilisateur manipulant le corps 20.

Avantageusement, des patins élastiques de frottement 114 en forme de demi lune dont la base est fixée dans la platine 60 sont placés entre les parois 66 de la platine 60 et la tranche des extensions horizontales 43 du profilé 40. Les patins 114 permettent avantageusement de compenser les jeux transversaux, au bénéfice de la qualité de coulissement perçue par l'utilisateur.

Le moteur électrique actionnant la palette pour le déverrouillage du pion est commandé par l'utilisateur par l'intermédiaire de l'interrupteur monté dans le module électrique 36. Un câble électrique 110 relie le module de blocage 100 et le module électrique 36 au moins pour transmettre la commande de déverrouillage. Entre le module de blocage 100 et le module électrique 36, le câble 110 passe au moins dans le tunnel 89 qui forme un moyen de guidage du câble circulant dans le tunnel.

Une extrémité dite fixe 130 du câble 110 est raccordée au socle 12 fixe par rapport au véhicule. A partir de l'extrémité fixe 130, une portion dite fixe du câble 110 est guidée dans le tunnel 87 du socle 12. Dans le tunnel 87, la portion fixe du câble 110 n'est pas mobile à coulissement.

L'autre extrémité 132 du câble 110 est raccordée au module électrique 36 du corps 20 monté à mobilité sur le socle 12. A partir de l'extrémité mobile 132, une portion dite mobile du câble 110 est mobile par rapport au socle 12 quand le chariot 40 coulisse. Une partie de la portion mobile du câble 110 est guidée dans le tunnel 89.

La portion mobile du câble 110 comporte une portion dite libre qui est susceptible de se déformer entre le socle 12 et le corps 20 quand le corps 20 coulisse par rapport au socle 12. La portion libre 134 du câble 110 est raccordée à la portion fixe, à l'avant du socle 12 dans l'exemple représenté. La portion libre 134 comporte une partie formant une boucle de débattement.

Lors du coulissement du profilé 40 par rapport à la platine 60, le câble doit pouvoir coulisser dans le tunnel de circulation 89 sans se plier de façon parasite, en particulier aux extrémités avant et arrière du socle 12, à chaque extrémité du tunnel 89.

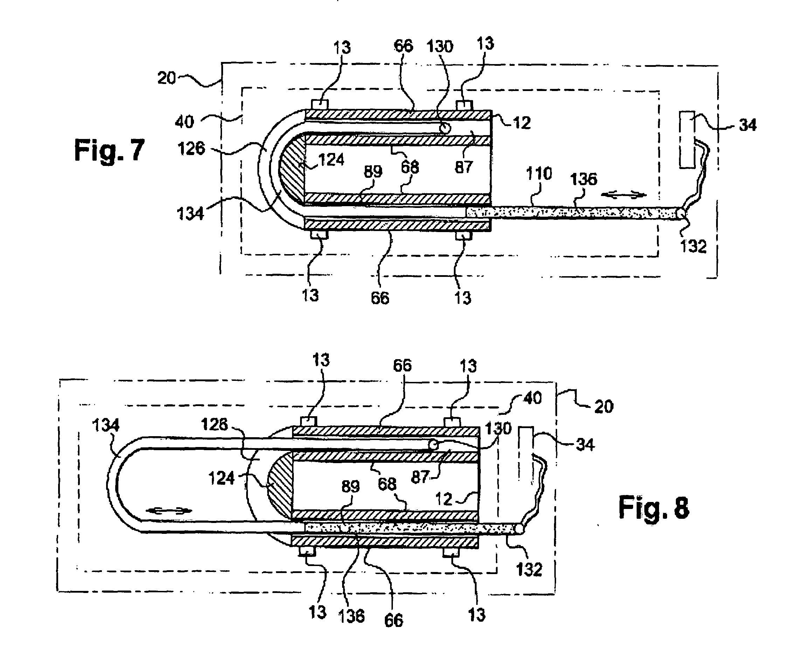

A cette fin, la portion mobile du câble 110 comporte au moins un tronçon dit rigide 136, représenté hachuré avec des croisillons aux figures 7 et 8. La rigidité du tronçon rigide 136 est supérieure à celle du reste du câble 110 qui est essentiellement déterminée par la capacité de pliage des conducteurs de la gaine isolante et de l'éventuel blindage nécessaire à la fonction électrique du câble 110. Pour assurer cette fonction, le tronçon rigide 136 comporte une âme rigide, ici une tige rectiligne de renforcement matière plastique. Dans l'exemple décrit, l'extrémité arrière de la tige du tronçon rigide 136 est fixé dans le corps 20.

Dans l'exemple représenté, un segment d'extrémité avant du tronçon rigide 136 du câble 110 raccordée à la portion libre 134 est logée en permanence à l'intérieur du tunnel de guidage 89.

Un segment d'extrémité arrière 140 du tronçon rigide 136 du câble 110 est logé en permanence à l'intérieur du tunnel de guidage 89.

De façon générale, au moins une partie du tronçon rigide 136 doit être logée en permanence à l'intérieur du tunnel de guidage 89. En effet, à proximité de chaque extrémités avant et arrière du socle 12, dans le tunnel de guidage 89, une partie de la portion rigide 136 du câble 110 doit être présente quelle que soit la position du chariot 40. Ainsi, le câble 110 est guidé dans le tunnel de circulation 89 lors du coulissement de la console, sans risque de pliage du câble aux extrémités du socle 12.

A l'avant du socle 12, le guide 124 améliore la circulation du câble 110 et permet de guider la boucle de la portion libre 134 du câble dans un plan sensiblement horizontal.

En position arrière du corps 20, le câble est engagé dans la gorge 128 du guide avant 124. La convexité du guide avant 124 est favorable pour éviter un pliage intempestif du câble 110, en maintenant un certain rayon de courbure du câble à l'avant su socle 12.

Avantageusement, le profilé 40, en particulier les parois joues 44 munies de l'extension 43 ainsi que les ailes 46 et 48 protègent le câble tout en pouvant aider à sa circulation. L'extension 43 et l'aile 48, en correspondance avec les interstices de la platine 60, favorise aussi la tenue du corps 20 de la console par rapport au plancher du véhicule lors d'un accident violent.

Le câble 110 sert à relier l'interrupteur de commande qui forme un accessoire électrique de la console, comme le moteur. Le module électrique 36 comporte d'autres accessoires électriques comme les dispositifs d'éclairage.

Dans l'exemple décrit, la boude de débattement de la partie libre 134 du câble 110 est à l'avant du socle, le câble étant rattaché à l'arrière sur le corps 20. En variante d'exécution, la boucle pourrait être à l'arrière et le câble rattaché à l'avant sur le corps.

## Revendications

1. Console (10) pour habitacle (2) de véhicule (1), du type comportant un premier élément (20) monté coulissant par rapport à un second élément (12) entre une position extrême avant et une position extrême arrière, et comportant un câble (110) dont une première extrémité (132) est raccordée au premier élément et dont une deuxième extrémité (130) est raccordée au second élément, **caractérisée en ce que** le câble (110) comporte un tronçon rigide (136) comportant une âme rigide le troncon rigide (136) du câble (110) étant apte à se déplacer avec le premier élément (20, 40) par rapport au second élément (12).

2. Console selon la revendication 1, **caractérisée en ce que** le second élément (12) comporte au moins un moyen de guidage (89) dans lequel se déplace le tronçon rigide (136) du câble (110).

3. Console selon la revendication 2, **caractérisée en ce que** le moyen de guidage (89) du câble (110) est un tunnel formé dans le second élément (12) et orienté parallèlement à la direction de coulissement.

4. Console selon l'une quelconque des revendications 2 à 3, **caractérisée en ce que** le moyen de guidage (89) du tronçon rigide (136) du câble est aménagé dans un socle (12) du second élément sur lequel un chariot (40) du premier élément (20) est monté coulissant.

5. Console selon la revendication précédente, **caractérisée en ce que** le câble (110) comporte une boucle souple (134) de débattement qui est interposée entre le socle (12) et le tronçon rigide (136).

6. Console selon la revendication précédente, **caractérisée en ce que** le moyen de guidage du tronçon rigide (138) du câble comporte des moyens de guidage (124) de la boucle (134) dans un plan horizontal.

7. Console selon l'une quelconque des revendications 5 à 6, **caractérisée en ce que** l'extrémité avant du tronçon rigide (136) du câble (110) raccordée à la boucle (134) est logée en permanence à l'intérieur du moyen de guidage (89).

8. Console selon l'une quelconque des revendications 5 à 7, **caractérisée en ce qu'**un segment d'extrémité arrière du tronçon rigide (136) du câble (110) raccordé au chariot (40) est logé en permanence à l'intérieur du moyen de guidage (89).

9. Console selon l'une quelconque des revendications 5 à 8, **caractérisée en ce qu'**une extrémité avant du socle (12) comporte un guide transversal convexe (124) adapté à recevoir au moins une partie de la boucle (134) souple dans la position arrière du premier élément (20, 40).

10. Console selon l'une quelconque des revendications précédentes, **caractérisée en ce que** le câble (110) est un câble électrique.

11. Console selon l'une quelconque des revendications précédentes, **caractérisée en ce que** le câble (110) dessert en énergie électrique un organe de commande de moyens électriques de verrouillage (100) pour immobilisation du premier élément (20, 40), ledit organe étant monté sur le premier élément.

12. Console selon l'une quelconque des revendications précédentes, **caractérisée en ce que** le tronçon rigide (136) du câble (110) est rectiligne.

13. Console selon la revendication précédente, **caractérisée en ce que** l'âme rigide est une tige de renforcement.

14. Console selon la revendication précédente, **caractérisée en ce qu'**une extrémité de la tige de renforcement est fixée dans le premier élément (20).

## Claims

1. A console (10) for a passenger compartment (2) of a vehicle (1) of the type comprising a first element (20) mounted slidably with respect to a second element (12) between an extreme forward position and an extreme rearward position, and comprising a cable (110) of which a first end (132) is connected to the first element and of which a second end (130) is connected to the second element, **characterised in that** the cable (110) comprises a rigid portion (136) comprising a rigid core, the rigid portion (136) of the cable (110) being capable of being displaced with the first element (20, 40) with respect to the second element (12).

2. A console according to claim 1 **characterised in that** the second element (12) comprises at least one guide means (89) in which the rigid portion (136) of the cable (110) is displaced.

3. A console according to claim 2 **characterised in that** the guide means (89) for the cable (110) is a tunnel formed in the second element (12) and oriented in parallel relationship with the direction of sliding movement.

4. A console according to either one of claims 2 and 3 **characterised in that** the guide means (89) for the rigid portion (136) of the cable is provided in a base (12) of the second element, on which a carriage (40) of the first element (20) is slidably mounted.

5. A console according to the preceding claim **characterised in that** the cable (110) comprises a flexible deflection loop (134) interposed between the base (12) and the rigid portion (136).

6. A console according to the preceding claim **characterised in that** the means for guiding the rigid portion (138) of the cable comprises means (124) for guiding the loop (134) in a horizontal plane.

7. A console according to either one of claims 5 and 6 **characterised in that** the forward end of the rigid portion (136) of the cable (110), which is connected to the loop (134), is permanently accommodated in the interior of the guide means (89).

8. A console according to any one of claims 5 to 7 **characterised in that** a rearward end segment of the rigid portion (136) of the cable (110) which is connected to the carriage (40) is permanently accommodated in the interior of the guide means (89).

9. A console according to any one of claims 5 to 8 **characterised in that** a forward end of the base (12) comprises a convex transverse guide (124) adapted to receive at least a part of the flexible loop (134) in the rearward position of the first element (20, 40).

10. A console according to any one of the preceding claims **characterised in that** the cable (110) is an electric cable.

11. A console according to any one of the preceding claims **characterised in that** the cable (110) supplies electrical power to a member for controlling electrical locking means (100) for immobilisation of the first element (20, 40), said member being mounted on the first element.

12. A console according to any one of the preceding claims **characterised in that** the rigid portion (136) of the cable (110) is straight.

13. A console according to the preceding claim **characterised in that** the rigid core is a reinforcing rod.

14. A console according to the preceding claim **characterised in that** an end of the reinforcing rod is fixed in the first element (20).

## Patentansprüche

1. Konsole (10) für eine Fahrgastzelle (2) eines Fahrzeugs (1) von der Art, welche ein erstes Element (20) aufweist, das gleitend im Verhältnis zu einem zweiten Element (12) zwischen einer vorderen Endstellung und einer hinteren Endstellung montiert ist und welches ein Kabel (110) aufweist, von dem ein erstes Ende (132) mit dem ersten Element verbunden ist und von dem ein zweites Ende (130) mit dem zweiten Element verbunden ist, **dadurch gekennzeichnet, dass** das Kabel (110) einen starren Teilabschnitt (136) aufweist, welcher einen starren Kern umfasst, wobei der starre Teilabschnitt (136) des Kabels (110) fähig ist, sich mit dem ersten Element (20, 40) im Verhältnis zu dem zweiten Element (12) zu verschieben.

2. Konsole nach Anspruch 1, **dadurch gekennzeichnet, dass** das zweite Element (12) mindestens ein Führungsmittel (89) aufweist, in welchem sich der starre Teilabschnitt (136) des Kabels (110) verschiebt.

3. Konsole nach Anspruch 2, **dadurch gekennzeichnet, dass** das Führungsmittel (89) des Kabels (110) ein Tunnel ist, welcher in dem zweiten Element (12) gebildet ist und welcher parallel zu der Gleitrichtung ausgerichtet ist.

4. Konsole nach irgendeinem der Ansprüche 2 bis 3, **dadurch gekennzeichnet, dass** das Führungsmittel (89) des starren Teilabschnitts (136) des Kabels in einem Sockel (12) des zweiten Elements angeordnet ist, auf welchem ein Schlitten (40) des ersten Elements (20) gleitend montiert ist.

5. Konsole nach dem vorangegangenen Anspruch, **dadurch gekennzeichnet, dass** das Kabel (110) eine nachgiebige Schlaufe (134) zur Verschiebung aufweist, welche zwischen den Sockel (12) und den starren Teilabschnitt (136) gesetzt ist.

6. Konsole nach dem vorangegangenen Anspruch, **dadurch gekennzeichnet, dass** das Führungsmittel des starren Teilabschnitts (136) des Kabels Mittel zur Führung (124) der Schlaufe (134) in einer horizontalen Ebene aufweist.

7. Konsole nach irgendeinem der Ansprüche 5 bis 6, **dadurch gekennzeichnet, dass** das vordere Ende des starren Teilabschnitts (136) des Kabels (110), welches mit der Schlaufe (134) verbunden ist, permanent im Inneren des Mittels zur Führung (89) aufgenommen ist.

8. Konsole nach irgendeinem der Ansprüche 5 bis 7, **dadurch gekennzeichnet, dass** ein hinteres Endsegment des starren Teilabschnitts (136) des Kabels (110), welches mit dem Schlitten (40) verbunden ist, permanent im Inneren des Mittels zur Führung (89) aufgenommen ist.

9. Konsole nach irgendeinem der Ansprüche 5 bis 8, **dadurch gekennzeichnet, dass** ein vorderes Ende des Sockels (12) eine transversale, konvexe Führung (124) aufweist, die angepasst ist, mindestens einen Teil der nachgiebigen Schlaufe (134) in der hinteren Stellung des ersten Elements (20, 40) aufzunehmen.

10. Konsole nach irgendeinem der vorangegangenen Ansprüche, **dadurch gekennzeichnet, dass** das Kabel (110) ein elektrisches Kabel ist.

11. Konsole nach irgendeinem der vorangegangenen Ansprüche, **dadurch gekennzeichnet, dass** das Kabel (110) ein Steuerbauteil von elektrischen Verriegelungsmitteln (100) zur Feststellung des ersten Elements (20, 40) mit elektrischer Energie versorgt, wobei das Bauteil auf dem ersten Element montiert ist.

12. Konsole nach irgendeinem der vorangegangenen Ansprüche, **dadurch gekennzeichnet, dass** der starre Teilabschnitt (136) des Kabels (110) geradlinig ist.

13. Konsole nach dem vorangegangenen Anspruch, **dadurch gekennzeichnet, dass** der starre Kern ein Versteifungsschaft ist.

14. Konsole nach dem vorangegangenen Anspruch, **dadurch gekennzeichnet, dass** ein Ende des Versteifungsschafts in dem ersten Element (20) fixiert ist.
